(19) Europäisches Patentamt
European Patent Office
Office européen des brevets

(11) **EP 1 561 844 B1**

(12) **EUROPEAN PATENT SPECIFICATION**

(45) Date of publication and mention
of the grant of the patent:
**10.03.2010 Bulletin 2010/10**

(51) Int Cl.:
***C25D 21/12*** *(2006.01)*

(21) Application number: **05001806.8**

(22) Date of filing: **28.01.2005**

(54) **Electrode cartridge and a system for measuring internal stress of an electroplated film**

Elektrodenkassette und System zum Messen der inneren Spannung von galvanischen Beschichtungen

Cassette d'électrode et système pour l'analyse de contraintes internes d'un film électroplaqué

(84) Designated Contracting States:
**DE FR GB**

(30) Priority: **03.02.2004 JP 2004027300**

(43) Date of publication of application:
**10.08.2005 Bulletin 2005/32**

(73) Proprietor: **YAMAMOTO-MS Co., Ltd.**
**Tokyo (JP)**

(72) Inventors:
• **Yamamoto, Wataru**
**c/o Yamamoto-MS Co., Ltd.**
**Tokyo (JP)**
• **Akiyama, Katsunori**
**c/o Yamamoto-MS Co., Ltd.**
**Tokyo (JP)**
• **Harada, Fumio**
**c/o Yamamoto-MS Co., Ltd.**
**Tokyo (JP)**
• **Tsuru, Yutaka**
**Kitakyushu-shi, Fukuoka (JP)**

(74) Representative: **Strehl Schübel-Hopf & Partner**
**Maximilianstrasse 54**
**80538 München (DE)**

(56) References cited:
**DE-A1- 19 936 036      US-A- 4 086 154**
**US-A- 4 648 944      US-A1- 2003 079 995**

• **YUTAKA TSURU ET AL: "Development of the measuring system for mean internal stress in nickel film plated on copper substrate" ELECTROCHEMISTRY AND PHYSICOCHEMISTRY, vol. 60, no. 9, September 1992 (1992-09), pages 780-784, XP009095959**

**Description**

BACKGROUND OF THE INVENTION

The present invention relates to an electrode cartridge with a strain gauge which is applied to measurement of an internal stress for a film of plating and a system for implementing the measurement with the electrode cartridge.

Of late years plating has been extensively applied to a surface of metal. The smaller becomes the size of an object to which plating is applied, the higher requirements have been imposed on a thinner film of plating and its performance. Especially in the field of semiconductors, it has come to require that a thickness and width of plating be controlled to be as small as some nanometers.

It is necessary to optimize conditions of electro deposition such as composition of a plating liquid, a current density, a speed of agitation and a temperature of plating liquid so as to constantly obtain a best film of plating. It sometimes happens in a generally known method for plating that characteristics of a film of plating drift as composition of a plating liquid progressively departs from its original ones, even if optimized conditions are established at starting of plating. This leads to a necessity that conditions be controlled by continuous monitoring of a plating bath so that stable characteristics of a film of plating may be maintained. One example of monitoring conditions of a plating bath is to measure an internal stress of a film of plating (hereinafter shortly referred to as "internal plating stress" if necessary). A conventional apparatus for measuring an internal stress of a film of plating includes an apparatus using a spiral stress meter. Description is given of this apparatus (hereinafter referred to as "spiral plating stress meter" if necessary).

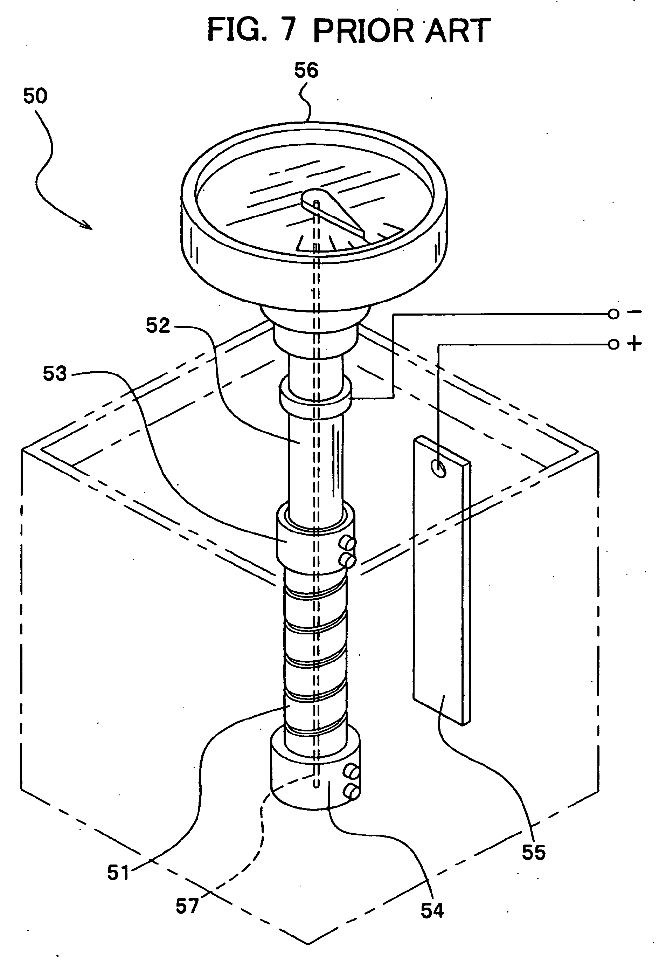

As shown in FIG.7, a spiral plating stress meter 50 holds a test sample 51 of a spirally formed member around both a support shaft 52 with a clamp 53 and a rotational shaft 57 with a clamp 54. An inner surface (back surface) of the test sample 51 is coated with fluorescent resin so that a film of plating is formed only on its outer surface (front surface). The support shaft 52 is a cylindrical member having a hollow portion. The clamp 53 connected to a lower end portion of the support shaft 52 holds an upper end portion of the test sample 51. The rotational shaft 57 is a slender pole, which rotatably penetrates the hollow portion of the support shaft 52. An upper end portion of the rotational shaft 57 is connected to a pointer of a transducer 56 and its lower end portion to the clamp 54. In this way, torsion of the test sample 51 is transmitted to the rotational shaft 57, which produces a rotation of the pointer of the transducer 56.

When the spiral plating stress meter 50 is placed in a tank filled with a plating liquid and a current is supplied between the meter 50 and an anode plate by a power supply (not shown), a front surface of the test sample 51 is plated, which creates an internal stress in the test sample 51 and a resulting rotation of the rotational shaft 57. The transducer 56 transforms the rotation into a torsion angle ($\alpha$), so that the meter 50 measures an internal plating stress ($\sigma$), which can be calculated by an expression (1).

$$\sigma = (2k/pt) \times (\alpha/d) \qquad (1)$$

where $k$ is a spiral constant ($mm \cdot N$/deg), $p$ a pitch of spiral ($mm$), $t$ a thickness of spiral plate ($mm$), $\alpha$ a torsion angle (deg) and $d$ a thickness of plating ($mm$).

Although the spiral plating stress meter 50 is able to measure an internal stress of plating with relatively high accuracy, it is difficult to apply the meter 50 for measurement of a minute stress because it is necessary to read a pointer of the transducer 56 with the naked eye. Also it is burdensome for a person in charge when he reads the pointer at predetermined intervals so as to monitor a change in internal stress, which the spiral plating stress meter 50 is able to provide in real time. Furthermore, because the pointer of the transducer 56 is read by the person with the naked eye, there is another problem that an error resulting from reading occurs.

As reading is performed for the pointer of the transducer 56 with the naked eye in the spiral plating stress meter 50, it is necessary for the pointer to displace so much that the displacement is visible to the naked eye. The smaller is stiffness of the test sample 51, the more rotational displacement makes the pointer of the transducer 56. Accordingly, the thinner is the test sample 51, the smaller stress it is theoretically possible to measure. However, there has been a problem that it is impossible to accurately measure an internal stress of a film of plating if the stiffness of the test sample 51 is decreased (the thickness of test sample 51 is reduced). This attributes to the fact that deformation of the test sample 51 releases the internal stress of the film of plating, thereby giving a misleading smaller value. In other words, the spiral plating stress meter 50 has limitations in terms of the accuracy of measurement for an internal stress of a film of plating.

On the other hand, another method for measuring an internal stress of a film of plating has been studied using a principle of strain gauge, which is reported in a non-patent document, Yutaka Tsuru et al. Development of the Measuring System for Mean Internal Stress in Nickel Film Plated on Copper Substance page 780 - 784 DENKI KAGAKU Vol. 60 No.9, September 1992.

This method uses a strain gauge which is attached to a back surface of a cathode plate. The strain gauge measures distortion (minute deformation) of the cathode plate which results from an internal stress of a film of plating. In this way, the method calculates the internal stress based on the distortion.

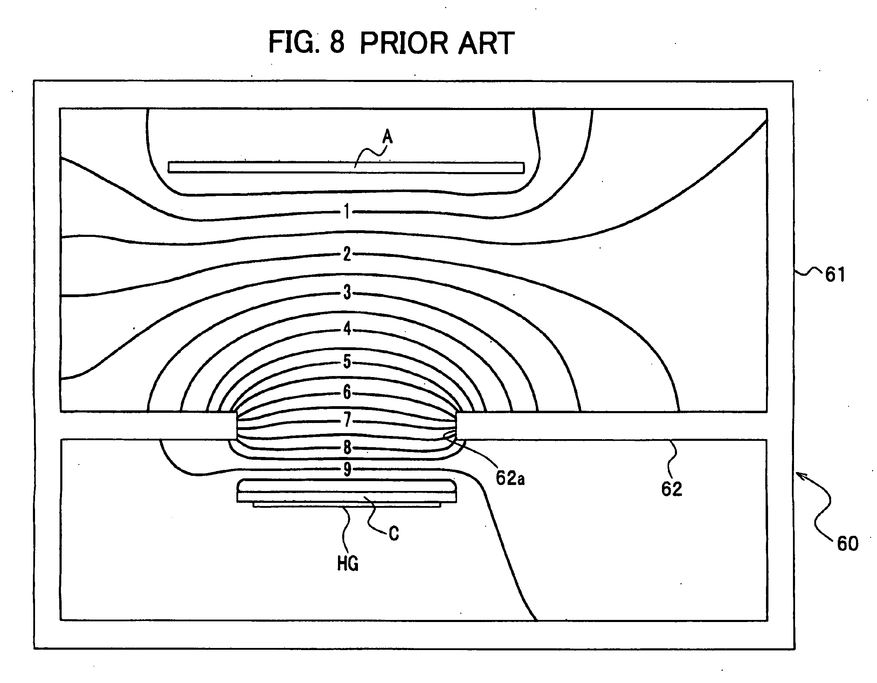

FIG.8 is a sectional view illustrating a distribution of voltage in a plating tank according to a conventional apparatus for measuring an internal stress of a film of plating using a strain gauge. A conventional apparatus 60 for measuring an internal stress of a film of plating includes a plating tank 61, a cathode plate C, an anode plate A, a shield plate 62. The plating tank 61 is filled with a plating liquid. The cathode plate C and the anode plate A are disposed so that these two plates mutually confront with a predetermined spacing. The shield plate 62, which has a through hole 62a of a predetermined size, is interposed between the cathode plate C and the anode plate A. A strain gauge HG is attached to a back surface of a plating section of the cathode plate C.

An accurate measurement for an internal stress of a film of plating with the apparatus 60 requires a uniform thickness of the film of plating, which is formed on the cathode plate C as an object to be plated. As shown in FIG.8, the apparatus 60 is accordingly adapted to provide equipotential lines which are parallel with the cathode plate C. This is realized by not only placing the shield plate 62 having the through hole 62a, but also adjusting appropriately a spacing between the cathode plate C and the shield plate 62 as well as a spacing between the shield plate 62 and the anode plate A. In this way, the distribution of voltage within the tank is properly adjusted, so that it is possible to form a uniform thickness of a film of plating.

Japanese Published Patent Application 2000-002598 filed by the present applicant is listed here for information, which discloses an apparatus for measuring an internal stress of a film of plating.

However, in order to acquire a uniform thickness of a film of plating, it has been required to adjust (1) the spacing between the cathode plate C and the shield plate 62 as well as the spacing between the anode plate A and the shield plate 62, (2) a ratio of width between the through hole 62a and the cathode plate C and (3) geometrical relationship in a direction of height between the through hole 62a and the plating section of the cathode plate C. When an adjustment is manually done, it has sometimes taken much time or it has been sometimes impossible to obtain a uniform thickness of a film of plating due to a poor adjustment. This has occurred oftener when a measurement is made for an internal stress of a very thin film of plating.

Even if the adjustments such as (1) to (3) are successfully carried out, it has sometimes occurred that the width of the anode plate A varies due to its dissolution in continuing plating. This leads to a change in equipotential lines, thereby disarranging their parallelism relative to the cathode plate C. In this way, there has been a problem that a uniform thickness of a film of plating can not be obtained and an internal stress can not be accurately measured accordingly.

When a power supply is connected to both cathode plate C and anode plate A to supply current, hydrogen ions ($H^+$) collect on a surface of the cathode plate C, forming pits (recesses) on a film of plating. If a large number of pits are created, it is impossible to accurately measure an internal stress of a film of plating. To solve this problem, it is necessary to prepare a device for removing the hydrogen ions, which collect on the film of plating. Methods for removing the hydrogen ions include one for providing vibration for the cathode plate C and another for blowing off the hydrogen ions by spraying the cathode plate C with bubbles. However, the method using vibration has had an adverse effect on measurement of strain gauge to create noises. On the other hand, the method using bubbles has sometimes affected conditions of a film of plating due to a variation in position of bubbles injected. In this way, when an adjustment is manually made for the geometrical relationship between the cathode plate C and injection holes, it has been difficult to guarantee the repeatability of a film of plating due to a fine deviation of the geometrical relationship, which results in degradation of accuracy for measurement of an internal stress of a film of plating.

**SUMMARY OF THE INVENTION**

The present invention seeks to solve disadvantages described above and to provide not only an electrode cartridge which is able to perform an accurate and easy measurement for an internal stress of a film of plating using a strain gauge, but also a system for measuring an internal stress of a film of plating with the electrode cartridge.

This object is met by the cartridge of claim 1 and the system of claim 3. In an embodiment, the present invention provides an electrode cartridge which is applied to measurement of an internal stress for a film of plating. The electrode cartridge comprises a cathode support, an anode support, a shield plate and an anode shell. The cathode support supports a cathode plate in a plating liquid, and the cathode plate has a plating section, to a back surface of which a strain gauge is attached. The anode support supports an anode plate in the plating liquid so that the anode plate is opposite to the cathode plate with a predetermined spacing. The shield plate is interposed between the cathode plate and the anode plate. The anode shell surrounds a periphery and an end portion of the anode plate in the plating liquid. A through hole is made in the shield plate in such a manner that the through hole confronts the plating section and has a geometry which is reduced by a first predetermined scale factor relative to a geometry of the plating section. An opening is made in the anode shell in such a manner that the opening confronts the plating section and has a geometry which is magnified by a second predetermined scale factor relative to the geometry of the plating section.

The electrode cartridge described above enables an arrangement that the cathode plate and the anode plate not only mutually confront with the predetermined spacing but also have a predetermined relationship in terms of size which is given by the through hole and the opening described above. This arrangement dispenses with fine tuning for not only the disposition of the cathode plate and the anode plate but also the spacing between them, thereby providing an easier measurement for an internal stress of a film of plating.

Furthermore, the electrode cartridge described above, which is able to maintain a constant width (size) of the opening of the anode shell in spite of a change in a width of the anode plate due to dissolution, keeps a distribution of voltage within the plating liquid so as to be parallel with the cathode plate in its vicinity. In other words, it is possible to obtain a uniform thickness for a film of plating without an adverse effect resulting from dissolution of the anode plate. Therefore, it is possible to accurately and easily measure an internal stress of the film of plating. The width of the anode plate is preferably, but not necessarily, adapted to be greater than that of the opening so that the anode plate fully occupies the width of the opening even if the width of the anode plate decreases due to dissolution.

In this connection, a width and height of the through hole of the shield plate of the electrode cartridge are preferably, but not necessarily, adapted to be 0.4 to 0.8 times as large as those of the plating section, respectively. Also, a width and height of the opening of the anode shell are preferably, but not necessarily, adapted to be 1.1 to 1.3 times as large as those of the plating section. Selection of these sizes is able to prevent a thickness of the film of plating in the vicinity of edges of the plating section from being thicker than its other areas.

Dependent claim 2 relates to another preferred embodiment, wherein the electrode cartridge further comprises a bubble supplying device. The bubble supplying device extends from the cathode support to a portion opposite to a lower end of the cathode plate and injects bubbles from this portion.

The electrode cartridge described above, which obviates an adjustment for a relative position between the cathode plate and bubbles, is able to keep constantly spray the cathode plate with the bubbles. Because it is possible to prevent forming of pits without adjustment, guaranteeing the repeatability of film of plating, it is possible to accurately and easily measure an internal stress of the film of plating.

In still another embodiment, the present invention provides a system for measuring an internal stress for a film of plating with an electrode cartridge, which comprises a plating tank, a power supply, a measurement device and a computer. The plating tank stores the plating liquid, in which the electrode cartridge supporting the cathode plate and the anode plate is soaked. The power supply is electrically connected to the cathode plate and the anode plate. The measurement device is electrically connected to the strain gauge attached to the cathode plate. The computer calculates the internal stress for the film of plating based on results obtained by the measurement device in addition to characteristics of the cathode plate and the film of plating.

The system described above, which is equipped with the electrode cartridge, is able to provide an accurate and easier measurement for an internal stress of a film of plating. This is attributed to the fact that only if electrodes are placed in the electrode cartridge, it is possible to form a uniform thickness of the film of plating without cumbersome positioning of the electrodes and shield plate. In this way, the system provides an accurate and easy measurement for an internal stress of plating.

Furthermore, the system having the computer is able to measure a finer change in internal stress compared with a spiral plating stress meter, whose divisions are read with the naked eye. Because signals sent by the strain gauge are electrically incorporated into the measurement device, the system is able to obtain a change in internal stress in the form of electronic data. In addition, because the system solves a human error in reading, it is able to provide a more accurate and easier measurement for an internal stress of plating.

In this connection, the power supply includes a pulse power supply and an alternating-current power supply, for example, in addition to a direct-current power supply. It is possible for the computer to use an expression (2) to calculate an internal stress for a film of plating, for example. The computer includes a commercial personal computer and the like.

$$\sigma = Et^2\delta / [3(1-v)dl^2] \qquad\qquad (2)$$

where $\sigma$ is an internal stress of film of plating, $l$ a length of plating section of cathode plate, $t$ a thickness of cathode plate, $E$ Young's modulus of cathode plate, $v$ Poisson's ratio of cathode plate, $\delta$ a deflection of cathode plate and $d$ a thickness of film of plating.

The electrode cartridge and the system provide an accurate and easy measurement using a strain gauge for a measurement of an internal stress of a film of plating. In this way, it is possible to constantly obtain a best film of plating if conditions for plating are adjusted based on results measured by the system.

Because a strain gauge is able to measure a minute deformation of a cathode plate, it is possible to accurately and easily measure an internal stress of a film of plating which is formed thin enough for a use in a so-called nanotechnology.

## BRIEF DESCRIPTION OF THE DRAWINGS

FIG.1 is a perspective view illustrating a system for measuring an internal stress of a film of plating according to the present invention.

FIG.2 is a perspective view illustrating a plating tank and an electrode cartridge installed with a cathode plate and anode plate.

FIG.3 is six views (top, front, right side, left side, back and bottom views) illustrating an electrode cartridge.

FIGS.4A - 4C are sectional views taken along lines A - A, B - B and C - C in the top view of FIG.3, respectively.

FIG.5 is a perspective view as seen from line D - D in FIG.4C.

FIG.6 is a schematic diagram illustrating the geometrical relationship among a plating section of a cathode plate, a through hole of a shield plate and an opening of an anode shell.

FIG.7 is a perspective view illustrating a conventional spiral plating stress meter.

FIG.8 is a sectional view illustrating a distribution of voltage within a plating tank according to a conventional apparatus for measuring an internal stress of a film of plating using a strain gauge.

## DESCRIPTION OF THE PREFERRED EMBODIMENTS

An embodiment of the present invention is now described with reference to accompanying drawings. When the same element appears in different drawings, the same symbol is consistently used in these drawings. After description is given of the element once, no repetition will be made.

a. Structural description of a system for measuring an internal stress of a film of plating

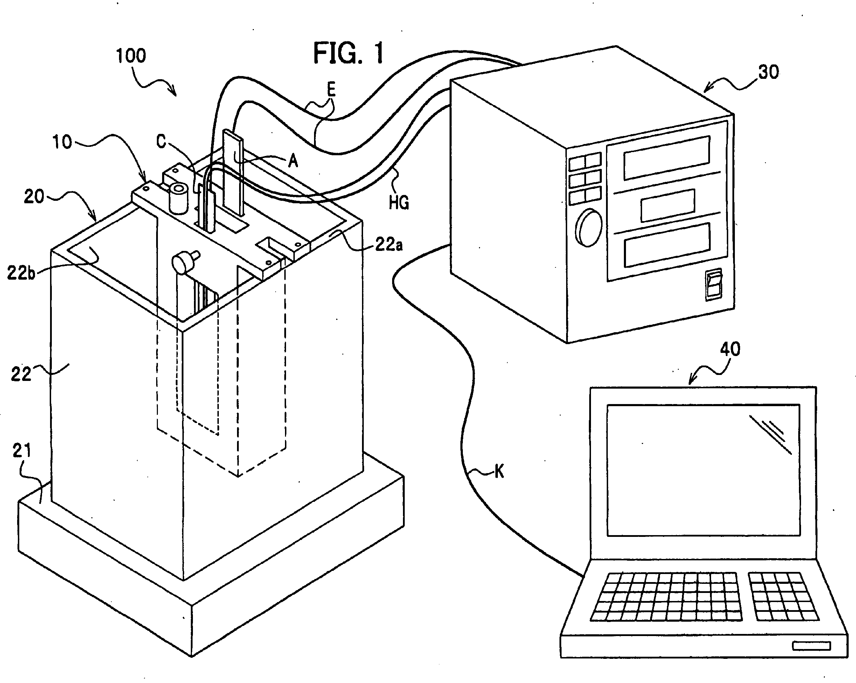

As shown in FIG.1, a system 100 for measuring an internal stress of a film of plating includes an electrode cartridge 10, a plating tank 20, a measurement device 30 and a note personal computer 40. The electrode cartridge 10 is equipped with a cathode plate C and an anode plate A. The plating tank 20 stores a plating liquid. The measurement device 30 is electrically connected to a strain gauge HG, which is attached to the cathode plate C. The note personal computer 40 calculates an internal stress of a film of plating based on results measured by the measurement device 30. In this connection, it is assumed that the measurement device 30 has a direct-current power supply to supply power required for plating.

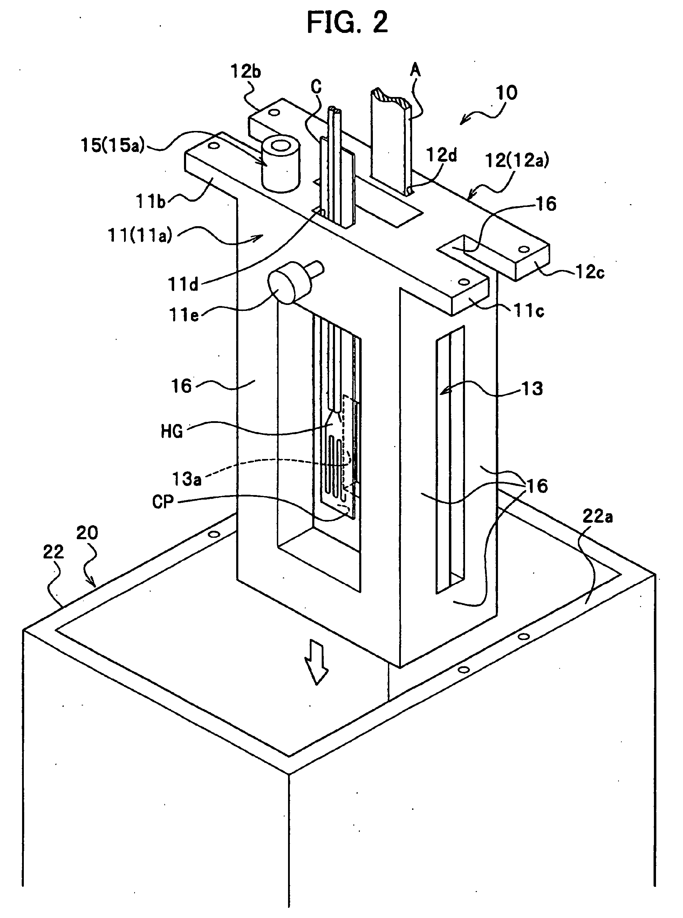

The electrode cartridge 10 supports the cathode plate C and the anode plate A in the plating liquid. The electrode cartridge 10 is soaked in the plating liquid filled in a reservoir portion 22 of the plating tank 20 to be described later. Lower end portions of the cathode plate C and the anode plate A are soaked in the plating liquid accordingly. The electrode cartridge 10 is supported on a top surface 22a of the reservoir portion 22 by flanges extending from the sides of the electrode cartridge 10. In this way, upper end portions of the cathode plate C and the anode plate A are exposed above the plating liquid. Detailed description is given of the structure of the electrode cartridge 10 later with reference to FIG.2.

Power cables E are electrically connected to the upper end portions of the cathode plate C and the anode plate A so that power is supplied to these plates C and A. The strain gauge HG is attached to the cathode plate C (see FIG. 2) and electrically connected to the measurement device 30. Description in detail will be given later to structure of the cathode plate C and the anode plate A with reference to FIG.2.

The plating tank 20, in which the electrode cartridge 10 is installed, serves as a tank for storing the plating liquid. The plating tank 20 includes a base 21 and a reservoir portion 22. The base 21 is a base structure for supporting the reservoir portion 22. The reservoir portion 22 is a rectangular parallelepiped having an upper opening. A hollow portion 22b of the reservoir portion 22 is filled with the plating liquid (not shown).

The electrode cartridge 10 and the plating tank 20 are preferably, but not necessarily, made of glass or plastic material, which is not susceptible to corrosion caused by a plating liquid, such as acryl, polypropylene and fluororesin.

The measurement device 30 measures a distortion of the cathode plate C based on a change in electric resistance (voltage signal) of the strain gauge HG (see FIG.2), which is attached to the cathode plate C. The measurement device 30, which is equipped with an equivalent circuit (Wheatstone bridge) including the strain gauge HG, for example, is able to measure a distortion of the cathode plate C based on a change in electric resistance of the strain gauge HG. Furthermore, the measurement device 30 is able to send signals of measured distortions to the note personal computer 40 via connecting cables K.

Having a direct-current power supply, the measurement device 30 is able to supply current to a circuit including the cathode plate C and the anode plate A. A supplied current and its period of time are sent to the personal computer 40, where they are used for calculation of a thickness of a film of plating and the like. It is possible to control the direct-current power supply of the measurement device 30 according to a current and a period of time for supplying power which are determined in advance so that a thickness of a film of plating to be formed meets a predetermined value. In this case, it may be possible to input the current and the period of time in the personal computer 40 in advance.

The note personal computer 40 calculates an internal stress based on a distortion of the cathode plate C measured by the measurement device 30.The note personal computer 40, which is electrically connected to the measurement device 30 via the connecting cables K, is able to receive data measured by the measurement device 30. The note personal computer 40 calculates an internal stress of a film of plating with the expression (2) described above, based on a result (distortion) of measurement by the strain gauge HG, characteristic values (thickness, length, Young's modulus, Poison's ratio and the like) of the cathode plate C (plating section CP) and a characteristic value (thickness) of the film of plating. Internal stress σ is shown on a display in the form of a graph, which helps a person engaged in a measurement have a better understanding of an internal stress for a film of plating.

In this connection, it may be alternatively possible for the note personal computer 40 to calculate a deflection (δ) based on a distortion (ε) measured by the measurement device 30, using their relationship which is experimentally obtained in advance.

b. Structure of electrode cartridge

Referring to FIGS.2 - 6, description is given of structure of the electrode cartridge 10.

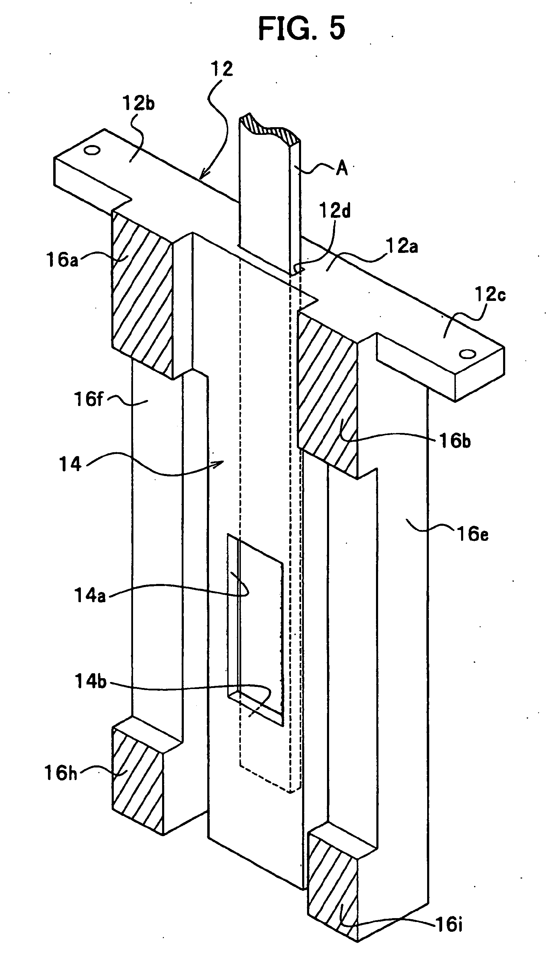

As shown in FIGS.2 - 6, the electrode cartridge 10 includes a cathode support 11, an anode support 12, a shield plate 13, an anode shell 14 (see FIG.5), a bubble supplying device 15 and a connecting portion 16 which connects these components 11 - 15.

The cathode support 11 includes a main portion 11a, flanges 11b and 11c, a cathode slot 11d and a bolt 11e. The cathode support 11 supports the cathode plate C which is inserted into the cathode slot 11d while the electrode cartridge 10 is soaked in the plating liquid.

The main portion 11a, which is a member similar to a rectangular parallelepiped, has the flanges 11b and 11c, which extend laterally from its both longitudinal ends. When the electrode cartridge 10 is soaked in the plating tank 20, the flanges 11b and 11c rest on the upper end portion 22a of the reservoir portion 22 so as to support the electrode cartridge 10 (main portion 11a).

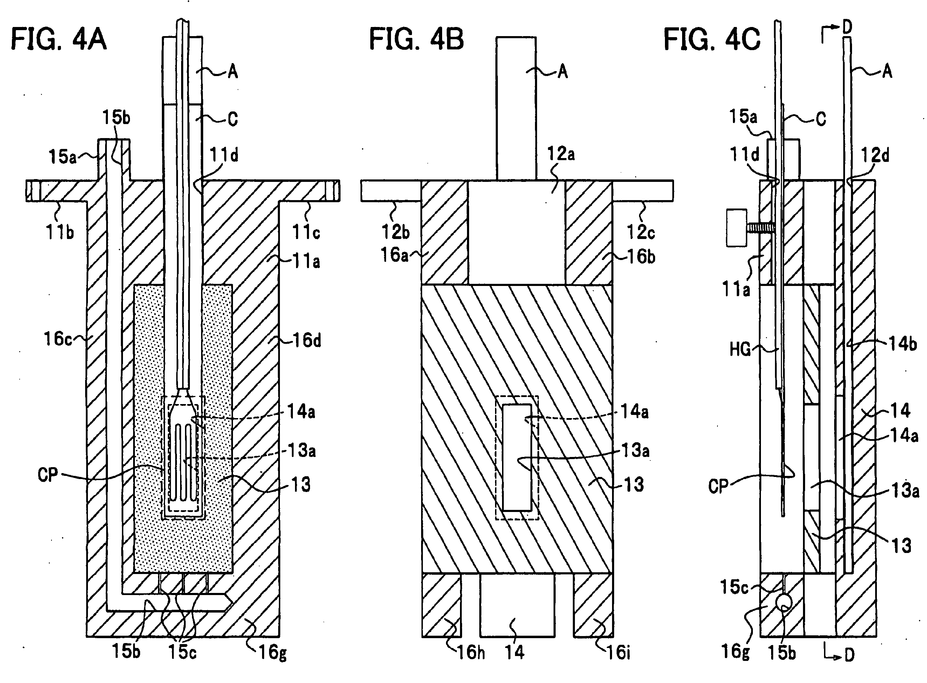

The cathode slot 11d through which the cathode plate C is inserted is bored in the middle of the main portion 11a (see FIG.4A). The main portion 11a has the bolt 11e, which is for adjusting and holding a vertical position of the cathode plate C.

Using the flanges 11b and 11c, the cathode support 11 with the cathode plate C inserted in the cathode slot 11d, which is secured by the bolt 11e, rests on the upper end portion 22a of the plating tank 20. In this way, it is possible to install the main portion 11a in the hollow portion 22b of the reservoir portion 22. The cathode plate C is supported by the main portion 11a in such a manner that a lower portion of the cathode C is soaked in the plating liquid and at the same time its upper portion is above the surface of the plating liquid.

Description is given of the cathode plate C, which is supported by the cathode support 11.

The cathode plate C, which is shaped like a slender plate (rectangular slice) made of electrically conductive material, serves as an object to be plated. At one end portion of the cathode plate C a plating section CP to be plated is formed, on which a film of plating is deposited. The plating section CP is formed by applying an insulating coating to the cathode plate C except for the plating section CP, for example. On the back surface of the plating section CP is attached the strain gauge HG, which is for measuring a distortion of the cathode plate C. The cathode plate C is installed in the cathode slot 11d while its plating section CP is directed downwardly. The position of the cathode C is adjusted by the bolt 11e so that the plating section CP vertically positioned so as to confront a through hole 13a of the shield plate 13. In this connection, it may be alternatively possible to prepare a projection on an upper portion of the cathode plate C so as to obviate vertical adjustment. This projection is preferably, but not necessarily, formed so that a center of the plating section CP vertically coincides with both a center of the through hole 13a and a center of an opening 14a of the anode shell 14 when the projection comes into contact with an upper surface of the main portion 11a. The cables E, which originate from a direct-current power supply belonging to the measurement device 30, are connected to the other end portion of the cathode plate C.

Although a thickness (t) of the cathode plate C is not limited in the present invention, an exemplary value may be preferably, but not necessarily, on the order of 0.6mm. Similarly, an exemplary value for a length (1) of the plating section CP may be preferably, but not necessarily, on the order of 25mm. It is possible to obtain Young's modulus ($E$) and Poisson's ratio ($v$), which are intrinsic to a lot of metal used for the cathode plate C, by testing and a certificate accompanying the lot.

The anode support 12 includes a main portion 12a, flanges 12b and 12c and an anode slot 12d. The anode support 12 supports the anode plate A, which is inserted into the anode slot 12d, in the plating liquid. The anode support 12 is structurally similar to the cathode support 11 except for the bolt 11e, a counterpart of which the anode support 12 does not have.

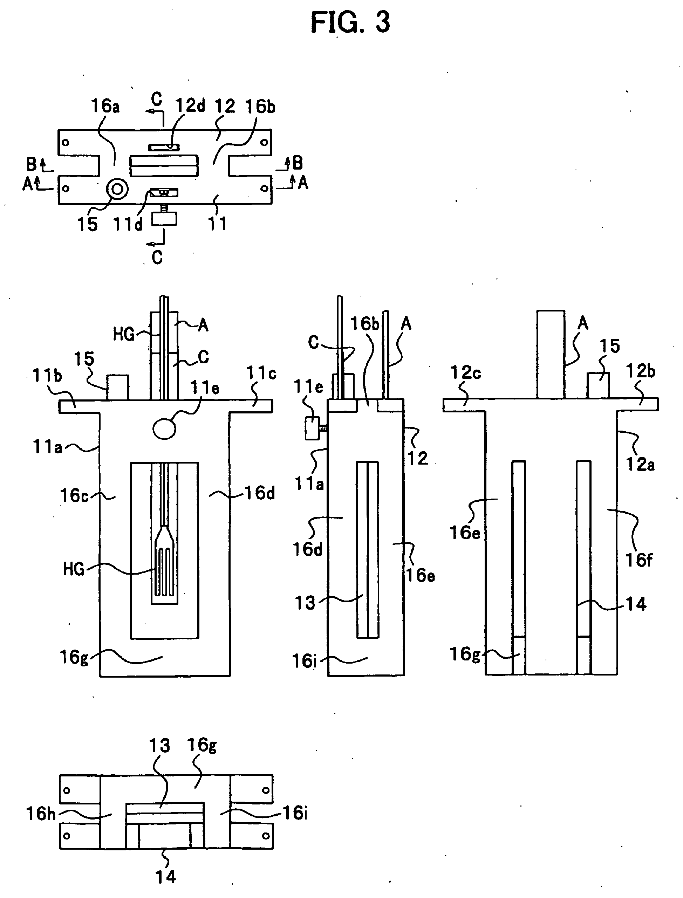

The main portion 12a of the anode support 12, which is a member shaped like a rectangular parallelepiped, is mechanically connected (secured) to the main portion 11a of the cathode support 11 with a predetermined spacing via a connecting portion 16 (16a and 16b) (see FIG.3). The spacing is adjusted so that a thickness of a film of plating is uniform. The flanges 12b and 12c, which extend from both end portions of the main portion 12a, rest on the upper end portion 22a of the plating tank 22. The anode slot 12d runs through the main portion 12a in a vertical direction, confronting the cathode slot 11d. When the anode plate A is inserted in the anode slot 12d, it will confront the cathode plate C.

Description is given of the anode plate A, which is supported by the anode support 12.

The anode plate A is an electrode which is shaped like a slender plate made of electrically conductive material, which is normally the same as that dissolved in a plating liquid. For example, in the case of nickel plating a material belonging to a nickel family is used. If the anode plate A is not dissolvable, it may be possible to select a material different from the plating liquid. The anode plate A is vertically supported while contacting with the anode shell 14 (see FIG.5) formed under the anode slot 12d.

The shield plate 13, which is a plate-like member and placed between the cathode plate C and the anode plate A, has a through hole 13a at a predetermined position (see FIG.4A), which is geometrically analogous to the plating section CP of the cathode plate C. The shield plate 13 having the through hole 13a adjusts a distribution of voltage within the plating liquid so as to be parallel with the cathode plate C. The shield plate 13 is connected to side surfaces of connecting portions 16c and 16d. Both lower end portions of the connecting portions 16c and 16d are connected by a connecting portion 16g. A vertical length of the shield plate 13 is adapted to be equal to a length from a lower surface of the main portion 11a of the cathode support 11 to an upper surface of the connecting portion 16g. In this way, an envelope encompassed by the connecting portions 16c, 16d and 16g in addition to the main portion 11a is shielded except for the through hole 13a relative to the anode plate A. When the surface of the plating liquid is lower than the upper end of the shielding palter 13, it may not be necessarily required that the upper end of the shielding plate 13 contact with the lower surface of the main portion 11a.

As shown in FIG.5, the anode shell 14, which is a member of tube with a bottom base surrounding both the anode plate A and its lower end portion, extends from the lower surface of the main portion 12a of the anode support 12. A hollow portion 14b of the anode shell 14, which communicates with the anode slot 12d made in the main portion12a, is able to surround the anode plate A which is inserted through an upper opening of the anode slot 12d. On its side surface confronting the cathode plate C, the anode shell 14 has an opening 14a, which is geometrically analogous to the plating section CP (rectangular in the present embodiment, for example) of the cathode C and communicates with the hollow portion 14b. The opening 14a is formed so that it confronts the through hole 13a of the shielding 13 (their centers of figure coincide).

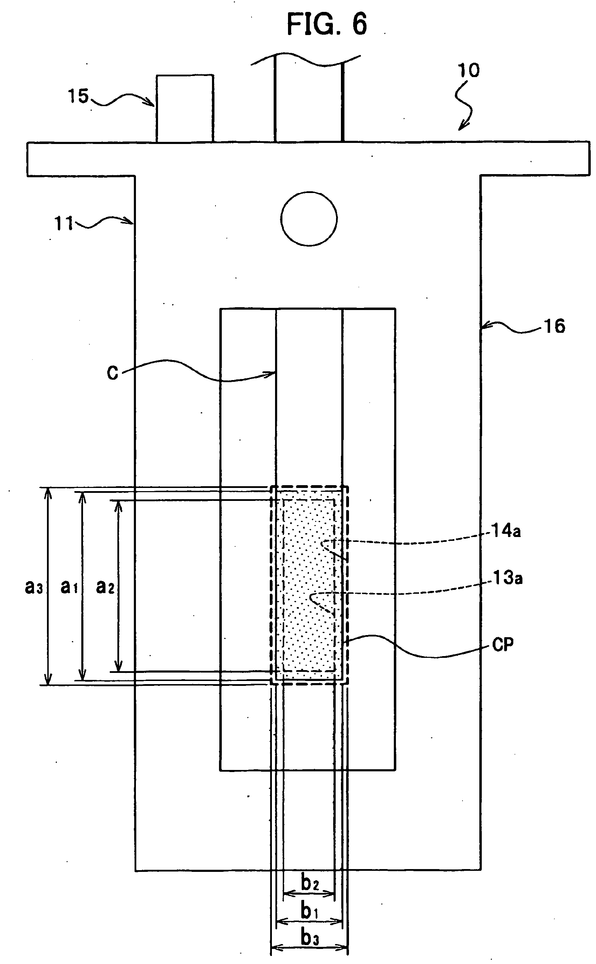

Description is given of the relationship among the plating section CP of the cathode plate C, the through hole 13a of the shield plate 13 and the opening 14a of the anode shell 14 with reference to FIG.6.

FIG.6 is a front view illustrating the plating section CP, the through hole 13a and the opening 14a in an overlapped fashion.

As shown in FIG.6, the plating section CP, the through hole 13a and the opening 14a are positioned so that their centers of figure coincide with each other, as seen from the front of the electrode cartridge 10.

The through hole 13a of the shield plate 13 is adapted to be analogous to the geometry of the plating section CP with a predetermined reduction scale. In this connection, the width and height of the through hole 13a are preferably, but not necessarily, adapted to be 0.4 to 0.8 times as large as those of the CP. For example, assuming a reduction scale of 0.7, the width and height of the through hole 13a result in:

$$a_2 = 0.7 \times a_1,$$

$$b_2 = 0.7 \times b_1,$$

where $a_1$ is a longitudinal length (height) of the plating section CP, $b_1$ is a lateral length (width) of the plating section CP, $a_2$ is a longitudinal length (height) of the through hole 13a and $b_2$ is a lateral length (width) of the through hole 13a (see FIG.6).

The opening 14a of the anode shell 14 is adapted to be analogous to the geometry of the plating section CP with a predetermined magnification scale. In this connection, the width and height of the opening 14a are preferably, but not necessarily, adapted to be 1.1 to 1.3 times as large as those of the plating section CP. For example, assuming a magnification scale of 1.2, the width and height of the through hole 13a result in:

$$a_3 = 1.2 \times a_1,$$

$$b_3 = 1.2 \times b_1,$$

where $a_3$ is a longitudinal length (height) of the opening 14a and $b_3$ is a lateral length (width) of the opening 14a (see FIG.6).

An advance arrangement, which is applied to the plating section CP, the through hole 13a and the opening 14a with the scales described above, makes it possible to easily obtain a uniform thickness of a film of plating, only if the cathode plate C is installed in the electrode cartridge 10.

The bubble supplying device 15, which is for injecting bubbles from the opposite position relative to the lower end of the cathode plate C, includes a tube connection port 15a, an air supply path 15b and injection holes 15c.

As shown in FIG.2, the tube connection port 15a is a cylindrical member, which projects from an upper surface of the main portion 11a of the cathode support 11. The tube connection port 15a accommodates connection of a tube (not shown) coming from an air pump (not shown). The air supply path 15b, through which air is supplied by the air pump to a lower end portion of the cathode plate C, extends from a hollow portion of the tube connection port 15a to the connecting portion 16g via the main portion 11a and the connecting portion 16c. The injection holes 15c extend from the air supply path 15b, penetrating the connecting portion 16g, which confronts the lower end portion of the cathode plate C. In this way, the injection holes 15c are able to inject bubbles toward the cathode plate C.

When bubbles injected through the injection holes 15c hit the plating section CP, they carry hydrogen ions which collect on the surface of a film of plating. This prevents hydrogen ions from collecting on the surface of a film of plating, thereby avoiding creation of pits. As the position of the injection holes 15c is fixed, there is no fear that the relative position between the cathode plate C and the injection holes 15c shifts, which will improve the repeatability of a film of plating.

As shown in FIG.2, the connecting portion 16 is a member to connect and secure a combination of components so that they are positioned and spaced in a predetermined manner. The combination includes one made of the cathode support 11 and the anode support 12, one made of the cathode support 11 and the shield plate 13 as well as the other one made of the anode support 12 and the shield plate 13. As long as the material used for fasteners and adhesives are not dissolved into a plating liquid, it may be possible to select any type of connection such as adhesion, mating and fastening with a bolt.

The connecting portions 16a and 16b connect the cathode support 11 and the anode support 12 with a predetermined spacing, thereby providing a desirable spacing between the cathode plate C and the anode plate A. In this connection, it may be possible to obviate the connecting portions 16a and 16b if a cathode support 11 and an anode support 12 are integrally formed as one member, different from the present embodiment in which these two supports 11 and 12 are separate. In the former case, the positions of the slots 11d and 12d are adjusted so that a desirable spacing between the cathode plate C and the anode plate A is obtained.

The connecting portions 16c and 16d extend downwardly from the lower surface of the main portion 11a so as to support the shield plate 13. The lower ends of the connecting portions 16c and 16d are connected with each other by the connecting portion 16g. In the present embodiment, the air supply path 15b and the injection holes 15c are formed inside these connecting portions 16c and 16g. This requires no dedicated members to supply bubbles, thereby bringing about structural simplification of the electrode cartridge 10 and its easy production.

Connecting portions 16e and 16f extend downwardly from the lower surface of the main portion 12a. Connecting portions 16h and 16i connect ends of the connecting portions 16c and 16d and ends of the connecting portions 16e and 16f. In this way, the shield plate 13, which is attached to the connecting portions 16c and 16d, is more securely supported. Lower ends of the connecting portions 16e and 16f and a lower end of the anode shell 14 are not connected, but bottomless slits are formed between the connecting portion 16e and the anode shell 14 and between the connecting portion 16f and the anode shell 14, respectively. If an anode bag (not shown) is installed in the anode shell 14 using these slits, it is possible to prevent anode slime generated by the anode plate A from giving an adverse effect on a film of plating.

c. Method for using an electrode cartridge

Description is given of a method for using of an electrode cartridge 10 with reference to FIGS.2 - 6.

First, a cathode plate C, in which a strain gauge HG is attached to a back surface of a plating section CP, is inserted into a cathode slot 11d of a cathode support 11. During this step, the cathode plate C is inserted so that not only an end portion closer to the plating section CP is directed downwardly, but also the plating section CP is confronted an anode plate A. Also the cathode plate C is adjusted by a bolt 11e so that the center of plating section CP coincides with both the center of a through hole 13a of a shield plate 13 and the center of an opening 14a of an anode shell 14.

The anode plate A is inserted into an anode slot 12d of an anode support 12. The anode plate A is then inserted into a hollow portion 14b of the anode shell 14 which is adapted to communicate with a lower portion of the anode slot 12d. The anode plate A is supported by the anode support 12 while resting on the bottom surface of the hollow portion 14b.

Accordingly, the cathode plate C and the anode plate A are positioned with a predetermined spacing, being opposite to each other. Also, the plating section CP of the cathode plate C, the through hole 13a of the shield plate 13 and the opening 14a of the anode shell 14 are positioned so as to meet a predetermined geometrical relationship. This results in elimination of adjustment not only for spacing between the cathode plate C and the anode plate A but also for their relative geometry, which will provide an easier measurement for internal stress of a film of plating.

When the temperature difference between a plating liquid and a cathode plate C is large, it is preferable but not required that the temperature of the cathode plate C is adapted to be close to that of the plating liquid. An example to realize this is preheating which is conducted for the cathode plate C using a tube such as a test tube with water, which is soaked in the plating liquid filled in a plating tank 20. In this way, it is possible to decrease an adverse effect of a deformation of the cathode plate C induced by temperature change, providing an accurate measurement of pure deformation (distortion) of the cathode plate C resulting from formation of a film of plating. The preheating tube provided in the plating tank 20 allows an easy adjustment for setting the temperature of the cathode plate C close to that of a plating liquid without a dedicated device.

Next, the electrode cartridge 10, in which the cathode plate C and the anode plate A is installed, is soaked in the plating liquid stored in the plating tank 20. Flanges 11b, 11c, 12b and 12c of the electrode cartridge 10 are rested on an upper end portion 22a of a reservoir portion 22 so that only a lower portion of the electrode cartridge 10 is soaked in the plating liquid but its upper portion, where power cables E originating from a power supply are connected to upper end portions of the cathode plate C and the anode plate A, stays above the surface of the plating liquid.

d. Method for using a system for measuring an internal stress of a film of plating

Description is given of a method for using a system 100 for measuring an internal stress of a film of plating with reference to FIG.1.

First, power cables E originating from a direct-current power supply (measurement device 30) are connected to upper end portions of a cathode plate C and an anode plate A of an electrode cartridge 10, which is placed in a plating tank 20. It is now possible to supply power between the cathode plate C and the anode plate A.

An strain gauge HG, which is attached to the cathode plate C, is electrically connected to the measurement device 30. Accordingly, it is possible to measure a distortion of the cathode plate C.

A tube (not shown) coming from an air pump (not shown) is connected to a tube connection port 15a. And bubbles for removing hydrogen ions are injected through injection holes 15c, which are located in an opposite position relative to a lower end portion of the cathode plate C. This will prevent formation of pits.

Power is supplied to the cathode plate C and the anode plate A through operation of the measurement device 30, and a measurement of distortion of the cathode plate C is started. The measured data is sent to a note personal computer 40 through connecting cables K.

The note personal computer 40 calculates an internal stress of a film of plating with an expression (2) based on the data measured by the measurement device 30 and characteristic values inputted in advance associated with the plating liquid and the cathode plate C.

$$\sigma = Et^2\delta/[3(1-v)dl^2] \qquad\qquad (2)$$

where σ is an internal stress of film of plating, $l$ a length of plating section of cathode plate, $t$ a thickness of cathode plate, $E$ Young's modulus of cathode plate, $v$ Poisson's ratio of cathode plate, δ a deflection of cathode plate and $d$ a thickness of film of plating.

The system 100 described above, which is equipped with a strain gauge HG, is able to provide an accurate and easier measurement for an internal stress of a film of plating.

Because it is not necessary to read divisions with the naked eye in conducting a measurement using the system 100, different from a spiral plating stress meter 50, the system 100 is free of errors associated with reading.

Because the strain gauge HG is able to measure a minute distortion of a cathode plate, it is possible to remarkably increase the accuracy of measurement. Accordingly, it is possible to provide a film of plating which meets requirements for a use in a so-called nanotechnology requesting high accuracy.

It will now be appreciated from the foregoing description that the present invention is not limited to the particularly illustrated embodiment discussed above and may be carried out in various modified forms.

For example, although the electrode cartridge 10 has a connecting portion 16 which is divided into a plurality of portions, it may be possible to eliminate connecting portions 16e, 16f, 16h and 16i as long as the shield plate 13 is securely supported.

Although the electrode cartridge 10 according to the present embodiment has the flanges 11b, 11c, 12b and 12c, it may be possible to eliminate these flanges as long as the electrode cartridge 10 is supported so that the upper end portions of the cathode plate C and the anode plate A stay above the surface of a plating liquid.

Although the electrode cartridge 10 according to the present embodiment has the anode shell 14 whose cross section is rectangular, it may be possible to select any geometry such as a circle, an ellipse and a polygonal as long as the size of opening 14a and geometrical relationship are properly adjusted.

It goes without saying that although the system 100 according to the present embodiment has a power supply as an internal device belonging to the measurement device 30, it may be possible to select a separate configuration.

Although in the system 100 according to the present embodiment, a distortion ($\varepsilon$) of the cathode plate C measured by the measurement device 30 is sent to the note personal computer 40, there may be some alternatives. One is that the measurement device 30 sends a change ($\nabla R$) in electric resistance to the note personal computer 40, where a distortion ($\varepsilon$) is calculated. Another one is that the measurement device 30 calculates a deflection ($\delta$) based on a distortion ($\varepsilon$) and sends it to the note personal computer 40.

Although in the system 100 according to the present embodiment, the note personal computer 40 calculates a thickness of a film of plating based on the expression (2), it may be possible to use any expression as long as it calculates a stress based on a distortion (deflection).

Although it is not a typical use of an electrode cartridge 10 according to the present invention, it may be possible to use the electrode cartridge 10 so as to support only a cathode plate C in a plating liquid when electroless plating is conducted.

## Claims

1. An electrode cartridge (10) which is applied to measurement of an internal stress for a film of plating, the electrode cartridge comprising:

   a cathode support (11) for supporting a cathode plate (C) in a plating liquid, the cathode plate (C) having a plating section (CP), to a back surface of which a strain gauge (HG) is attached;
   an anode support (12) for supporting an anode plate (A) in the plating liquid so that the anode plate (A) is opposite to the cathode plate (C) with a predetermined spacing;
   a shield plate (13) which is interposed between the cathode plate (C) and the anode plate (A);
   an anode shell (14) for surrounding a periphery and an end portion of the anode plate (A) in the plating liquid,

   wherein a through hole (13a) is made in the shield plate (13) in such a manner that the through hole (13a) confronts the plating section (CP) and has a geometry which is reduced by a first predetermined scale factor relative to a geometry of the plating section (CP), and
   wherein an opening (14a) is made in the anode shell (14) in such a manner that the opening (14a) confronts the plating section (CP) and has a geometry which is magnified by a second predetermined scale factor relative to the geometry of the plating section (CP).

2. An electrode cartridge (10) according to claim 1 further comprising a bubble supplying device (15) which extends from the cathode support (11) to a portion opposite to a lower end of the cathode plate (CP) and is adapted to inject bubbles from this portion.

3. A system (100) for measuring an internal stress for a film of plating, the system comprising:

   the electrode cartridge (10) according to claim 1 or 2;
   a plating tank (20) for storing the plating liquid, in which the electrode cartridge (10) supporting the cathode plate (C) and the anode plate (A) is soaked;
   a power supply (30) which is electrically connected to the cathode plate (C) and the anode plate (A);
   a measurement device (30) which is electrically connected to the strain gauge (HG) attached to the cathode plate (C); and

a computer (40) for calculating the internal stress for the film of plating based on results obtained by the measurement device (30), characteristics of the cathode plate (C) and characteristics of the film of plating.

**Patentansprüche**

1. Elektrodenkassette (10), die zur Messung einer internen Spannung eines Überzugsfilms verwendet wird, mit:

einem Kathodenhalter (11) zum Halten einer Kathodenplatte (C) in einer Überzugsflüssigkeit, wobei die Kathodenplatte (C) einen Überzugsabschnitt (CP) aufweist, an dessen hinterer Fläche ein Dehnungsmessgerät (HG) angebracht ist;

einem Anodenhalter (12) zum Halten einer Anodenplatte (A) in der Überzugsflüssigkeit, so dass die Anodenplatte (A) mit einem vorbestimmten Abstand gegenüber der Kathodenplatte (C) angeordnet ist;

einer Abschirmplatte (13) die zwischen der Kathodenplatte (C) und der Anodenplatte (A) angeordnet ist;

einem Anodenmantel (14) zum Umgeben eines Umfangs und eines Endabschnitts der Anodenplatte (A) in der Überzugsflüssigkeit,

wobei ein Durchgangsloch (13a) derart in der Abschirmplatte (13) vorgesehen ist, dass das Durchgangsloch (13a) dem Überzugsabschnitt (CP) gegenüber steht und eine Geometrie aufweist, die um einen ersten vorbestimmten Skalierungsfaktor relativ zu einer Geometrie des Überzugsabschnitts (CP) verkleinert ist, und

wobei eine Öffnung (14a) in dem Anodenmantel (14) derart vorgesehen ist, dass die Öffnung (14a) dem Überzugsabschnitt (CP) gegenüber steht und eine Geometrie aufweist, die um einen zweiten vorbestimmten Skalierungsfaktor relativ zu der Geometrie des Überzugsabschnitts (CP) vergrößert ist.

2. Elektrodenkassette (10) nach Anspruch 1, ferner mit einer Blasenzuführeinrichtung (15), die von dem Kathodenhalter (11) zu einem einem unteren Ende der Kathodenplatte (CP) entgegengesetzten Abschnitt verläuft und die dazu ausgelegt ist, von diesem Abschnitt Blasen einzuführen.

3. System (100) zum Messen einer internen Spannung eines Überzugsfilms, mit:

der Elektrodenkassette (10) gemäß Anspruch 1 oder 2;

einem Überzugsbehälter (20) zum Aufbewahren der Überzugsflüssigkeit, in der die die Kathodenplatte (C) und die Anodenplatte (A) haltende Elektrodenkassette (10) eingetaucht ist;

einer Leistungsversorgung (30), die elektrisch an die Kathodenplatte (C) und die Anodenplatte (A) angeschlossen ist,

einer Messeinrichtung (30), die elektrisch an das an der Kathodenplatte (C) angebrachte Dehnungsmessgerät (HG) angeschlossen ist; und

einem Computer (40) zum Berechnen der internen Spannung des Überzugsfilms auf Grundlage von durch die Messeinrichtung (30) erhaltenen Ergebnissen, Charakteristika der Kathodenplatte (C) und Charakteristika des Überzugsfilms.

**Revendications**

1. Cartouche d'électrode (10) qui est appliquée à la mesure d'une contrainte interne pour un film de placage, la cartouche d'électrode comprenant :

un support de cathode (11) pour supporter une plaque de cathode (C) dans un liquide de placage, la plaque de cathode (C) ayant une section de placage (CP), sur une surface arrière de laquelle une jauge de contraintes (HG) est fixée ;

un support d'anode (12) pour supporter une plaque d'anode (A) dans le liquide de placage de telle manière que la plaque d'anode (A) est opposée à la plaque de cathode (C) avec un espacement prédéterminé ;

une plaque de protection (13) qui est intercalée entre la plaque de cathode (C) et la plaque d'anode (A) ;

un boîtier d'anode (14) pour entourer une périphérie et une partie d'extrémité de la plaque d'anode (A) dans le liquide de placage,

dans laquelle un trou de passage (13a) est pratiqué dans la plaque de protection (13) de telle manière que le trou de passage (13a) fait face à la section de placage (CP) et a une géométrie qui est réduite d'un premier facteur d'échelle prédéterminé par rapport à la géométrie de la section de placage (CP), et

dans laquelle une ouverture (14a) est pratiquée dans le boîtier d'anode (14) de telle manière que l'ouverture (14a) fait face à la section de placage (CP) et a une géométrie qui est agrandie d'un second facteur d'échelle prédéterminé par rapport à la géométrie de la section de placage (CP).

2. Cartouche d'électrode (10) selon la revendication 1 comprenant en outre un dispositif d'alimentation en bulles (15) qui s'étend depuis le support de cathode (11) jusqu'à une partie opposée à une extrémité inférieure de la section de placage (CP) et est adapté pour injecter des bulles depuis cette partie.

3. Système (100) pour mesurer une contrainte interne pour un film de placage, le système comprenant :

    la cartouche d'électrode (10) selon la revendication 1 ou 2 ;

    un réservoir de placage (20) pour stocker le liquide de placage, dans lequel la cartouche d'électrode (10) supportant la plaque de cathode (C) et la plaque d'anode (A) est trempée ;

    une alimentation électrique (30) qui est connectée électriquement à la plaque de cathode (C) et à la plaque d'anode (A) ;

    un dispositif de mesure (30) qui est connecté électriquement à la jauge de contrainte (HG) fixée sur la plaque de cathode (C) ; et

    un calculateur (40) pour calculer la contrainte interne pour le film de placage d'après les résultats obtenus par le dispositif de mesure (30), les caractéristiques de la plaque de cathode (C) et les caractéristiques du film de placage.

FIG. 1

EP 1 561 844 B1

# FIG. 2

# FIG. 3

FIG. 4A

FIG. 4B

FIG. 4C

16

# FIG. 5

# FIG. 6

# FIG. 7 PRIOR ART

# FIG. 8 PRIOR ART

EP 1 561 844 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2000002598 A

**Non-patent literature cited in the description**

• **Yutaka Tsuru et al.** *Development of the Measuring System for Mean Internal Stress in Nickel Film Plated on Copper Substance,* September 1992, vol. 60 (9), 780-784